# EUROPÄISCHE PATENTANMELDUNG

(11) **EP 1 248 027 A1**
(43) Veröffentlichungstag der Anmeldung: **09.10.2002**
(21) Anmeldenummer: 02006242.8
(22) Anmeldetag: 20.03.2002
(51) Int. Cl.: F16L 23/04

(54) **Vorrichtung zum axialen Verbinden zweier rohrartiger Bauteile**

(30) Priorität: 03.04.2001 DE 10116591
(71) Anmelder: Rasmussen GmbH, 63477 Maintal (DE)
(72) Erfinder: Böhrer, Robert, 63486 Bruchköbel (DE); Hauke, Michael, 63607 Wächtersbach (DE); Knuth, Dietrich, 63450 Hanau (DE); Mann, Stephan, 63599 Biebergemünd (DE)
(74) Vertreter: Knoblauch, Andreas, Dr.-Ing.

(57) **Zusammenfassung**

Bei einer Vorrichtung zum axialen Verbinden zweier rohrartiger Bauteile (1, 2) sind an Endabschnitten (3) der Bauteile (1, 2) vorgesehene radiale Flansche (4) durch eine spannbare, formschlüssig mit den Flanschen (4) in Eingriff bringbare Verbindungseinrichtung (6) zueinander hin belastbar. Zwischen den Flanschen (4) ist eine thermisch hoch belastbare Dichteinrichtung (7) angeordnet. Um sicherzustellen, daß die Verbindung raumsparend, einfach zu montieren und zu demontieren ist und den Einbau von Meßfühlern ermöglicht, ist erfindungsgemäß dafür gesorgt, daß die Verbindungseinrichtung (6) zumindest einen sich über wenigstens einen erheblichen Teil des Umfangs der Flansche (4) erstreckenden Blechstreifen (8) aus hartelastischem Material mit an seinen axial äußeren Rändern um mehr als 90° nach innen umgebogenen Zähnen (9) aufweist, die sich im gespannten Zustand der Verbindungseinrichtung (6) mit ihren radial inneren Enden an den voneinander abgekehrten Seiten der Flansche (4) unter Vorspannung abstützen und die Dichteinrichtung (7) axial belasten.

## Beschreibung

Die Erfindung bezieht sich auf eine Vorrichtung zum axialen Verbinden zweier rohrartiger Bauteile, bei der an Endabschnitten der Bauteile vorgesehene radiale Flansche durch eine spannbare, formschlüssig mit den Flanschen in Eingriff bringbare Verbindungseinrichtung zu einander hin belastbar sind und eine thermisch hoch belastbare Dichteinrichtung zwischen den Flanschen angeordnet ist.

Derzeit wird im Automobilbau in der Abgasrohrleitung zum Verbinden rohrartiger Gehäuseteile, die jeweils einen auswechselbaren Rußfilter (auch "Partikelfilter" genannt) und einen Katalysator enthalten, eine Flanschverbindung verwendet. Die Flanschverbindung hat radiale Flansche, die an den Gehäuseteilen angeschweißt und durch mehrere die Flansche durchsetzende Schrauben verbunden sind. Zwischen den Flanschen ist eine thermisch hoch belastbare flache metallische Dichtung eingespannt, durch den die Schrauben ebenfalls hindurchgeführt sind. Um die Schrauben durch entsprechende Löcher in den Flanschen hindurchzuführen, muß der Außendurchmesser der Flansche erheblich größer als der der Gehäuseteile sein. Dies beansprucht entsprechend großen Bauraum unter dem Kraftfahrzeug. Darüber hinaus ist die Montage und Demontage der zahlreichen Schrauben aufwendig. Alle Teile der Verbindungsvorrichtung und das Gehäuse können im Betrieb hohen Temperaturen von 500 bis 900°C und Erschütterungen ausgesetzt sein. Daher muß sichergestellt sein, daß sich die Schraubverbindung aufgrund der thermischen Längenänderung der Teile und der Erschütterungen nicht löst und/oder undicht wird. Sodann möchte man durch die Verbindungsstelle der Gehäuseteile hindurch Temperatur- und Druckmeßfühler einbauen können, was bei dieser Flanschverbindung wegen Platzmangels nicht möglich ist.

Bei sogenannten Kegel-Flanschverbindungen, wie sie beispielsweise aus den deutschen Patentschriften 30 38 491, 32 46 136 oder 40 28 449 bekannt sind, weist die Verbinddungseinrichtung eine sogenannte Profilschelle mit einem sie umgebenden Spannband auf, das durch einen Schraubverschluß gespannt wird. Die Profilschelle hat nach innen gebogene konisch divergierende Wände, die sich beim Spannen an entsprechend konischen Seiten der Flansche anlegen und die Flansche gegeneinander oder gegen eine dazwischen angeordnete Dichtung ziehen. Die Flansche sind mit den zu verbindenden rohrartigen Bauteilen, wie Rohren oder runden Gehäuseteilen, durch Schweißen oder im Reibschluß verbunden oder einstückig mit ihnen ausgebildet. Solche Verbindungsvorrichtungen beanspruchen ebenfalls wegen ihres relativ großen Außendurchmessers großen Bauraum. Die Ausbildung der konischen Teile oder Flächen ist aufwendig, da sie eine möglichst gleiche Konizität haben müssen, um großflächig zusammenwirken zu können. Um bei hohen Innendrücken in den zu verbindenden rohrartigen Bauteilen die Gefahr einer bleibenden Verformung der konischen Teile zu vermeiden, müssen sie eine hohe Festigkeit aufweisen, was den Materialaufwand erhöht.

Ferner sind sogenannte Krallen-Kupplungen zum Verbinden von Rohren mit glatten Endabschnitten beispielsweise aus den deutschen Patentschriften 36 32 127 und 39 26 626 bekannt. Diese Krallen-Kupplungen üben jedoch selbst keine axial wirkende Spannkraft aus.

Der Erfindung liegt die Aufgabe zugrunde, eine Vorrichtung der eingangs genannten Art anzugeben, die insbesondere für den Einsatz in Abgasreinigungseinrichtungen im Automobilbau geeignet ist, eine dauerhafte, raumsparende Verbindung sicherstellt, hohen Kräften standhält, einfach zu montieren und zu demontieren ist und den Einbau von Meßfühlern ermöglicht.

Erfindungsgemäß ist diese Aufgabe bei der eingangs genannten Vorrichtung dadurch gelöst, daß die Verbindungseinrichtung zumindest einen sich über wenigstens einen erheblichen Teil des Umfangs der Flansche erstreckenden Blechstreifen aus hartelastischem Material mit an seinen axial äußeren Rändern um mehr als 90° nach innen umgebogenen Zähnen aufweist, die sich im gespannten Zustand der Verbindungseinrichtung mit ihren radial inneren Enden an den voneinander abgekehrten Seiten der Flansche unter Vorspannung abstützen und die Dichteinrichtung axial belasten.

Bei dieser Lösung werden die Zähne an dem oder den Blechstreifen beim Spannen der Verbindungseinrichtung gegen ihre Federkraft noch etwas weiter umgebogen. Dabei sind ihre an den Flanschen anliegenden Enden bestrebt, sich in Axialrichtung zu den Flanschen hin zu verschieben. Die Flansche werden dadurch fester gegen die zwischen ihnen angeordnete Dichteinrichtung gedrückt. Die Elastizität des Blechstreifenmaterials stellt sicher, daß die Zähne beim Lösen der Verbindung ihre ursprüngliche Form wieder annehmen, ohne sich bleibend zu verformen. Darüber hinaus können die Zähne thermische Durchmesseränderungen und Erschütterungen oder Schwingungen etwas ausgleichen. Die Zähne können sehr kurz und demzufolge die Flansche mit geringem Außendurchmesser raumsparend hergestellt werden.

Ein besonders geeignetes Material für den oder die Blechstreifen ist hitze- und korrosionsbeständiger Stahl. Dieses Material ist zugleich weitgehend stoßfest.

Ferner kann dafür gesorgt sein, daß der bzw. jeder Blechstreifen im Bereich seiner axial äußeren Ränder von einer spannbaren Schelle umgeben ist. Bei den spannbaren Schellen kann es sich um handelsübliche Spannschellen, z.B. Hochleistungs-Schneckengewindeschellen, handeln. Spannschellen haben in der Regel nur ein Spannelement, z.B. eine Spannschraube, das vormontiert ist und die Montage und Demontage bzw. das Verbinden und Trennen der rohrartigen Bauteile vereinfacht.

Sodann ist es günstig, wenn die Flansche auf sich in Umfangsrichtung der Endabschnitte der rohrartigen Bauteile erstreckenden Metallbändern einstückig mit den Metallbändern ausgebildet sind, wobei die Metallbänder mit den Endabschnitten fest verbunden sind. Diese Ausbildung ermöglicht eine einfache Verbindung der Flansche mit den rohrartigen Bauteilen, vorzugsweise durch Verschweißung.

Sodann kann dafür gesorgt sein, daß die Flansche einen Abstand von den einander zugekehrten Rändern der Metallbänder aufweisen und die Dichteinrichtung eine Metallhülse mit radial nach außen und axial abgewinkelten Randabschnitten aufweist, zwischen deren freien Rändern und den einander zugekehrten Seiten der Flansche eine Metallteilchen enthaltende Paste angeordnet ist, wobei die radialen Randabschnitte zwischen den einander zugekehrten und in der Nähe jeweils eines der beiden Enden der zu verbindenden rohrartigen Bauteile liegen und die axialen Randabschnitte auf jeweils einem der Metallbänder aufliegen.

Die Metallhülse bildet auf diese Weise den Hauptteil der Dichteinrichtung. Sie braucht selbst nicht elastisch zu sein und hält sehr hohen Temperaturen, wie sie beispielsweise in Abgasrohrleitungen, insbesondere in darin eingebauten Rußfiltern und Katalysatoren, auftreten, mit hoher Sicherheit stand. Ihre abgewinkelten Randabschnitte bewirken nicht nur die Lagesicherung der Hülse zwischen den rohrartigen Bauteilen, sei es in radialer oder axialer Richtung, sondern auch die der rohrartigen Bauteile. Die die Metallteilchen aufweisende Paste, z.B. Kupferpaste, dient der Abdichtung der Stoßfugen zwischen den Rändern der axialen Randabschnitte und den Flanschen und hält ebenfalls sehr hohen Temperaturen von weit über 500°C stand. Die Paste stellt keine feste Verbindung dar. Eine Demontage der Verbindung ist daher leicht möglich, um beispielsweise in den rohrartigen Bauteilen eingesetzte Bauteile, wie Filter und Katalysatoren, auszuwechseln.

Die Hülse kann ebenso wie die Blechstreifen hinreichend breit bemessen sein, um sie mit Löchern zur Durchführung und zum Einbau von Meßfühlern zu versehen.

Wenn der Innendurchmesser der Metallhülse zwischen ihren radialen Randabschnitten kleiner als der der zu verbindenden rohrartigen Bauteile ist, können die radialen Randabschnitte der Hülse gleichzeitig zur Lagesicherung von in den Rohrteilen eingesetzten Bauteilen dienen.

Die Erfindung wird nachstehend anhand von Zeichnungen eines bevorzugten Ausführungsbeispiels näher beschrieben. Darin stellen dar:

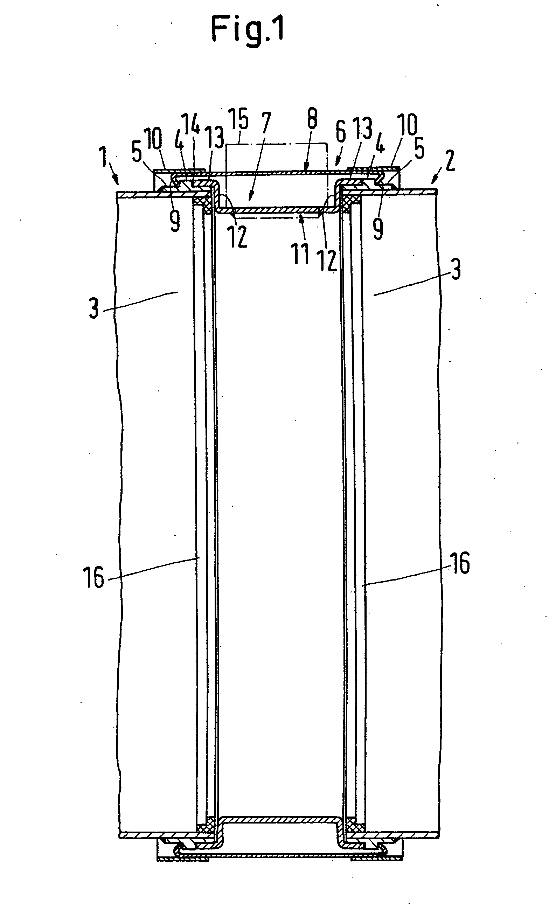

- Fig. 1: einen Axialschnitt durch ein Ausführungsbeispiel einer erfindungsgemäßen Verbindungsvorrichtung zwischen Endabschnitten zu verbindender rohrartiger Bauteile,

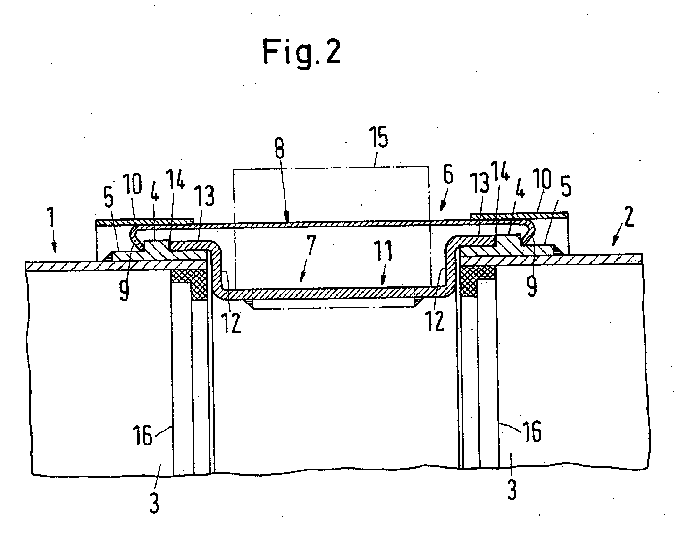

- Fig. 2: einen vergrößerten Ausschnitt der Fig. 1 und
- Fig. 3: eine Seitenansicht von Blechstreifen und einer sie umgebenden Spannschelle einer Verbindungseinrichtung der Vorrichtung nach den Fig. 1 und 2.

Die als Beispiel in den Zeichnungen dargestellte Vorrichtung dient zum axialen Verbinden zweier rohrartiger Bauteile 1 und 2, hier Gehäuseteile in einer Abgasrohrleitung eines Kraftfahrzeugs. In dem rohrartigen Bauteil 1 wird ein (nicht dargestellter) Rußfilter (oder "Partikelfilter") und in dem rohrartigen Bauteil 2 ein (nicht dargestellter) Katalysator eingesetzt. Jeder Endabschnitt 3 der Bauteile 1 und 2 ist von einem radialen Flansch 4 umgeben, der einstückig mit einem am Endabschnitt 3 befestigten, hier angeschweißten, Metallband 5 ausgebildet ist. Die Flansche 4 sind durch eine spannbare, formschlüssig mit den Flanschen 4 in Eingriff bringbare Verbindungseinrichtung 6 zueinander hin belastbar, und zwischen den Flanschen 4 ist eine thermisch hoch belastbare Dichteinrichtung 7 angeordnet.

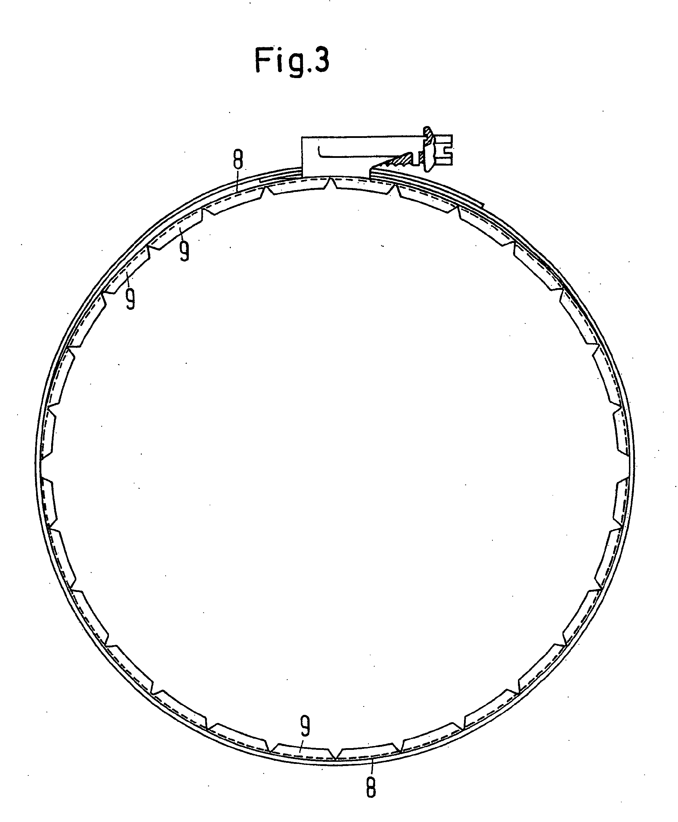

Die Verbindungseinrichtung 6 weist zumindest einen sich über wenigstens einen erheblichen Teil des Umfangs der Flansche 4 erstreckenden Blechstreifen 8 aus hartelastischem Metall mit an seinen axial äußeren Rändern um mehr als 90° nach innen umgebogenen Zähnen auf, die einen Winkel von etwa 30 bis 60°, hier etwa 40 bis 50°, vorzugsweise 45°, mit dem Mittelteil des zugehörigen Blechstreifens 8 einschließen. Im dargestellten Ausführungsbeispiels, siehe auch Fig. 3, sind zwei derartige sich jeweils etwa über den halben Umfang der Flansche 4 erstrekkende Blechstreifen 8 vorgesehen. Es kann aber auch nur ein Blechstreifen 8 vorgesehen sein, der sich nahezu über den gesamten Umfang der Flansche 4 erstreckt. Im gespannten Zustand der Verbindungseinrichtung 6 stützen sich die Zähne 9 mit ihren radial inneren Rändern an den voneinander abgekehrten Seiten der Flansche 4 unter Vorspannung ab, so daß die Dichteinrichtung 7 axial belastet wird.

Der bzw. jeder Blechstreifen 8 ist in den Bereichen seiner axial äußeren Ränder jeweils von einer Spannschelle 10, beispielsweise einer Schneckengewindeschelle, wie in Fig. 3 dargestellt, oder einer Schelle mit einem Kniehebelverschluß, umgeben.

Die Flansche 4 haben einen Abstand von den einander zugekehrten Rändern der beiden Metallbänder 5. Die Dichteinrichtung 7 besteht im wesentlichen aus einer Metallhülse 11 mit radial nach außen und axial abgewinkelten Randabschnitten 12 und 13. Zwischen den freien Rändern der axialen Randabschnitte 13 und den einander zugekehrten Seiten der Flansche 4 ist eine Metallteilchen enthaltende Paste 14, vorzugsweise sogenannte Kupferpaste, angeordnet. Die radialen Randabschnitte 12 liegen zwischen den einander zugekehrten Enden der zu verbindenden rohrartigen Bauteile 1, 2 und in der Nähe jeweils eines der beiden Enden, während die axialen Randabschnitte 13 auf jeweils einem der Metallbänder 5 aufliegen. Der Innendurchmesser der Metallhülse 11 zwischen ihren radialen Randabschnitten 12 ist kleiner als der Innendurchmesser der zu verbindenden rohrartigen Bauteile 1, 2.

Ein gestrichelt dargestellter Meßfühler 15 ist durch Löcher in einem der Blechstreifen 8 und der Metallhülse 11 hindurchgeführt und an der Innenseite der Metallhülse 11 angeschweißt. Der Meßfühler 15 dient zur Messung der Temperatur des durch die Metallhülse 11 hindurchströmenden Abgases. Ein weiterer, nicht dargestellter Meßfühler kann in gleicher Weise zum Messen des Gasdrucks in der Verbindungsvorrichtung eingebaut sein.

In den Endabschnitten 3 sind am Ende der rohrartigen Bauteile 1 und 2 ringförmige, innen abgestufte Halteringe 16 eingesetzt, die jeweils die Enden des Rußfilters und des Katalysators in einem radialen Abstand von den rohrartigen Bauteilen 1 und 2 bzw. hier den Gehäuseteilen umgeben und radial sowie axial abstützen.

Bei der dargestellten Ausbildung der Verbindungsvorrichtung werden die an dem oder den Blechstreifen 8 umgebogenen Zähne 9 beim Spannen der Schellen 10 elastisch etwas weiter umgebogen. Dabei sind ihre an den Flanschen 4 anliegenden Enden bestrebt, sich in Axialrichtung zu den Flanschen 4 hin zu verschieben. Die Flansche 4 werden dadurch fester gegen die zwischen ihnen angeordnete Dichteinrichtung 7 gedrückt. Die Elastizität der Blechstreifen 8 stellt sicher, daß die Zähne 9 beim Lösen der Verbindung ihre ursprüngliche Form wieder annehmen, ohne sich bleibend zu verformen. Darüber hinaus können die Zähne 9 thermische Durchmesseränderungen der rohrartigen Bauteile 2 und Blechstreifen 8 ausgleichen sowie Erschütterungen oder Schwingungen etwas dämpfen. Die Zähne 9 sind radial sehr kurz, so daß die Flansche 4 mit geringem Außendurchmesser raumsparend hergestellt werden können. Die Blechstreifen 8 können aus Stahl hergestellt sein, der nicht nur hartelastisch, sondern zugleich stoßfest, hitze- und korrosionsbeständig ist. Besonders geeignet sind die Stähle mit den Werkstoffnummern 1.4509; 1.4510; 1.4512 nach der europäischen Norm EN 10088 (US-Normen AISI Ti; AISI 309) und 1.4828 (Stahl Eisen Werkstoff-Blatt; AISI 309) sowie Federstahl. Auch die Hülse 11 kann aus einem der genannten Stähle bestehen. Vorzugsweise besteht sie aus dem Werkstoff Nr. 1.4509 oder 1.4510.

Die Verwendung der Spannschellen 10 ist vorteilhaft, weil sie in der Regel nur ein Spannelement, z.B. eine Spannschraube oder einen Spannhebel, aufweisen, das vormontiert ist und die Montage und Demontage bzw. das Verbinden und Trennen der rohrartigen Bauteile 1, 2 für einen Ein- und Ausbau bzw. Wechsel des Filters und Katalysators vereinfacht.

Die Blechstreifen 8 und Hülse 11 können so breit ausgebildet sein, daß hinreichend Platz für den Einbau des Meßfühlers 15 und eines weiteren, in Umfangsrichtung gegenüber dem Meßfühler 15 versetzt angeordneten Meßfühlers verbleibt.

Die Abwinklung der Randabschnitte 12 und 13 in Verbindung mit dem geringeren Innendurchmesser der Hülse 11 als dem der Bauteile 1, 2 hat den Vorteil, daß zum einen die radiale und axiale Lage der Dichteinrichtung 7 und zum anderen die der Bauteile 1, 2 gesichert ist und die Metallhülse 11 ein Widerlager für die Axialkräfte der Zähne 9 beim Spannen der Schellen 10 bildet. Gleichzeitig bildet die Metallhülse 11 ein Widerlager für den in den Gehäuseteilen 1 und 2 eingebauten Rußfilter bzw. Katalysator über die Halteringe 16, um die Axiallage von Rußfilter und Katalysator zu sichern.

Die Metallhülse 11 ist ebenso wie die metallhaltige Paste 14 thermisch hoch belastbar. So hält sie Temperaturen von wenigstens etwa 500°C stand. Dennoch kann die Dichteinrichtung 7 beim Lösen der Verbindungseinrichtung 6 leicht ausgebaut werden, da die Paste 14 keine feste Verbindung herstellt. Nach einer Reinigung der mit der Paste 14 in Berührung gekommenen Dichtflächen der Flansche 4 und Ränder der Metallhülse 11 kann die Metallhülse 11, nach Erneuerung der metallhaltigen Paste 14, wieder eingebaut werden.

Insgesamt benötigt die Verbindungsvorrichtung nur geringen Bauraum in radialer Richtung über den Außendurchmesser der zu verbindenden rohrartigen Bauteile 1, 2 hinaus, weil die Zähne 9 und die Flansche 4 in Radialrichtung relativ kurz ausgebildet sind.

## Patentansprüche

1. Vorrichtung zum axialen Verbinden zweier rohrartiger Bauteile (1, 2), bei der an Endabschnitten (3) der Bauteile (1, 2) vorgesehene radiale Flansche (4) durch eine spannbare, formschlüssig mit den Flanschen (4) in Eingriff bringbare Verbindungseinrichtung (6) zu einander hin belastbar sind und eine thermisch hoch belastbare Dichteinrichtung (7) zwischen den Flanschen (4) angeordnet ist, **dadurch gekennzeichnet, daß** die Verbindungseinrichtung (6) zumindest einen sich über wenigstens einen erheblichen Teil des Umfangs der Flansche (4) erstreckenden Blechstreifen (8) aus hartelastischem Material mit an seinen axial äußeren Rändern um mehr als 90° nach innen umgebogenen Zähnen (9) aufweist, die sich im gespannten Zustand der Verbindungseinrichtung (6) mit ihren radial inneren Enden an den voneinander abgekehrten Seiten der Flansche (4) unter Vorspannung abstützen und die Dichteinrichtung (7) axial belasten.

2. Vorrichtung nach Anspruch 1, **dadurch gekennzeichnet, daß** der bzw. jeder Blechstreifen (8) aus korrosions- und hitzebeständigem Stahl besteht.

3. Vorrichtung nach Anspruch 1 oder 2, **dadurch gekennzeichnet, daß** der bzw. jeder Blechstreifen (8) im Bereich seiner axial äußeren Ränder von einer spannbaren Schelle (10) umgeben ist.

4. Vorrichtung nach einem der Ansprüche 1 bis 3, **dadurch gekennzeichnet, daß** die Flansche (4) auf sich in Umfangsrichtung der Endabschnitte (3) der rohrartigen Bauteile erstreckenden Metallbändern (5) einstückig mit den Metallbändern ausgebildet sind, wobei die Metallbänder (5) mit den Endabschnitten (3) fest verbunden sind.

5. Vorrichtung nach Anspruch 4, **dadurch gekennzeichnet, daß** die Metallbänder (5) an den Endabschnitten (3) angeschweißt sind.

6. Vorrichtung nach einem der Ansprüche 1 bis 5, **dadurch gekennzeichnet, daß** die Flansche (4) einen Abstand von den einander zugekehrten Rändern der Metallbänder (5) aufweisen und die Dichteinrichtung (7) eine Metallhülse (11) mit radial nach außen und axial abgewinkelten Randabschnitten (12, 13) aufweist, zwischen deren freien Rändern und den einander zugekehrten Seiten der Flansche (4) eine Metallteilchen enthaltende Paste (14) angeordnet ist, wobei die radialen Randabschnitte (12) zwischen den einander zugekehrten und in der Nähe jeweils eines der beiden Enden der zu verbindenden rohrartigen Bauteile (1, 2) liegen und die axialen Randabschnitte (13) auf jeweils einem der Metallbänder (5) aufliegen.
